(19) Europäisches Patentamt / European Patent Office / Office européen des brevets

(11) **EP 3 678 021 B1**

(12) **EUROPEAN PATENT SPECIFICATION**

(45) Date of publication and mention
of the grant of the patent:
**26.07.2023 Bulletin 2023/30**

(21) Application number: **19822186.3**

(22) Date of filing: **17.05.2019**

(51) International Patent Classification (IPC):
*G06F 21/83* (2013.01)   *G06F 9/451* (2018.01)
*G06F 21/74* (2013.01)   *G06Q 20/32* (2012.01)
*G06F 21/53* (2013.01)

(52) Cooperative Patent Classification (CPC):
**G06F 21/83; G06F 9/451; G06F 21/53;
G06F 21/74; G06Q 20/3223; G06Q 20/3227;**
G06F 2221/031

(86) International application number:
**PCT/CN2019/087338**

(87) International publication number:
**WO 2019/242440 (26.12.2019 Gazette 2019/52)**

(54) **USER INTERFACE DISPLAY METHOD AND TERMINAL DEVICE**

BENUTZERSCHNITTSTELLENANZEIGEVERFAHREN UND ENDGERÄTEVORRICHTUNG

PROCÉDÉ D'AFFICHAGE D'INTERFACE UTILISATEUR, ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2018 CN 201810637260**

(43) Date of publication of application:
**08.07.2020 Bulletin 2020/28**

(73) Proprietor: **Huawei Technologies Co., Ltd.
Shenzhen, Guangdong 518129 (CN)**

(72) Inventors:
• **ZHANG, Peng
Shenzhen, Guangdong 518129 (CN)**
• **LIU, Chenguang
Shenzhen, Guangdong 518129 (CN)**

(74) Representative: **Gill Jennings & Every LLP
The Broadgate Tower
20 Primrose Street
London EC2A 2ES (GB)**

(56) References cited:
EP-A1- 2 648 129      WO-A1-2017/147786
WO-A1-2017/167127   CN-A- 104 133 670
CN-A- 104 809 413      CN-A- 107 066 888
US-A1- 2005 175 030   US-A1- 2013 301 830

**Description**

**TECHNICAL FIELD**

This application relates to the terminal field, and more specifically, to a trusted user interface display method and a terminal device.

**BACKGROUND**

With promotion and popularization of intelligent terminals, mobile payment has become one of main payment manners of people's daily consumption. The mobile payment is a service manner in which a user pays for a consumed commodity or service by using a mobile terminal (usually a mobile phone). While the mobile payment brings convenience to the user, security of the mobile payment has always been a concern. A mobile payment application usually runs in an open rich execution environment (REE). The REE is also referred to as a general operating environment, and mainly includes a rich operating system (Rich OS) running on a general purpose processor, for example, a terminal operating system such as Android® or iOS®. Such an open environment provides a channel for information leakage and malware transmission, and therefore it is difficult to satisfy a requirement of the mobile payment for security. For example, in the REE, a payment amount or an entered password displayed by an application may be hijacked by a malicious application, resulting in various payment security problems.

To resolve this problem, the Open Mobile Terminal Organization (OMTP) proposed a concept of a trusted execution environment (TEE). In July 2010, the GlobalPlatform® (GP) proposed a TEE standard. The TEE is an independent operating environment that runs outside the REE and is isolated from the REE. All applications in the TEE are dedicatedly customized trusted applications (TA). The TA may access hardware and software resources of the TEE by using an internal interface of the TEE. An application in the REE, also referred to as a client application (CA), cannot directly access the hardware and software resources of the TEE. The CA in the REE, only after TEE identity authentication succeeds, can invoke a resource or a service of the TEE, such as secure storage or secure display/input, by using an application programming interface (API) provided by the TEE. In this way, in a mobile payment scenario, if sensitive information input and display are needed, the CA on the REE side may invoke a secure display/input TA in the TEE, to display a trusted user interface (TUI) that satisfies a GP specification, so that a user enters sensitive information of the user, for example, enters a personal identification number (PIN) and confirm transaction information, by using the TUI. After the TUI is displayed, an entire screen display area is taken over by the TEE, and access of the REE to the display area is completely blocked, thereby preventing the CA in the REE from maliciously intercepting and stealing the sensitive information of the user.

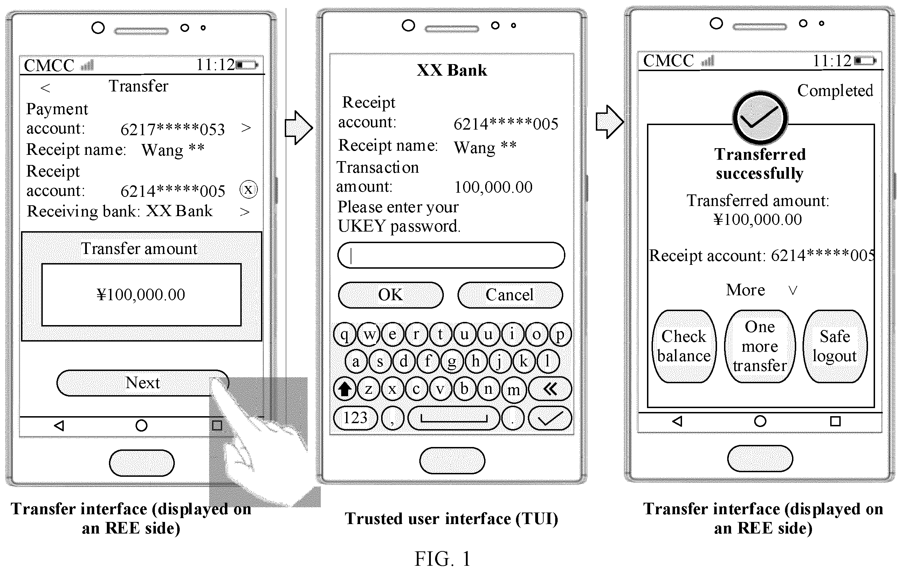

FIG 1 shows an example in which a user performs a transfer operation by using a TUI. As shown in FIG 1, the user logs in to a mobile phone banking application on an REE side and enters information such as a transfer amount in a transfer interface. Then, when the user enters and verifies a PIN code, the application invokes a secure display/input TA on a TEE side by using a specific interface to display the TUI. After the user enters the PIN code and confirms transaction information by using the TUI, a screen display area is returned to the REE. The mobile phone banking application on the REE side then displays a transfer complete page, and an entire transaction process ends. It can be learned from FIG 1 that, UI display of the CA on the REE side and TUI display on the TEE side are two independent processes. The TUI and a CA interface are not closely related and are not inconsistent in terms of styles. Moreover, the TUI is displayed in full screen and covers the entire screen display area. Therefore, a TUI control cannot be compatible with a control in the CA interface for display. For example, when the TUI is displayed, the user cannot see a status bar, a navigation bar, or the like, affecting user experience.

EP 2648129A1 discloses a method and apparatus for securing touch input. The method includes rendering a first screen in a secure world; rendering a second screen in a non-secure world; and outputting a secured input screen by displaying the first screen as an overlay above the second screen.

WO2017147786A1 discloses a method, apparatus, and system for using display content from a rich operating system (OS) environment as a background image in a trusted user interface (UI), comprising: capturing a display buffer of the rich OS environment; passing the captured display buffer to a Trusted Application; and displaying, with the Trusted Application, the captured display buffer as the background image in the trusted UI, wherein the Trusted Application is executed in a Trusted Execution Environment (TEE).

US20130301830A1 discloses devices, system, and methods of secure entry and handling of passwords and Personal Identification Numbers (PINs), as well as for secure local storage, secure user authentication, and secure payment via mobile devices and via payment terminals. A mobile electronic device includes: a secure execution environment (SEE) to securely execute code; and a secure video path (SVP) to securely exchange information between the SEE and a touch-screen of the mobile electronic device; wherein the SEE includes a secure password entry module to generate a scrambled on-screen interface, and to send the scrambled on-screen interface to the touch-screen through the SVP.

CN104809413A discloses a trusted user interface framework of a mobile platform based on TrustZone. The trusted user interface framework comprises a customization and separation implementation method for a trusted user interface and a multi-buffering-zone layered rendering mechanism for the trusted UI (user interface) and a common UI.

## SUMMARY

This application provides a user interface display method and a terminal device, to implement compatible display of a trusted user interface (TUI) control and a client application (CA) interface control, and improve user experience.

The invention is defined by the appended claims.

In a possible implementation, the rich operating system performs measurement, layout, and drawing operations on the common control by using a graphics-related service or component, to complete rendering of the common control, and buffers, to a frame buffer of the rich operating system, a non-secure surface obtained after rendering the common control.

In a possible implementation, the rich operating system transfers information about the secure control to the trusted operating system by using a communications agent.

In a possible implementation, the communications agent of the rich operating system transfers the information about the secure control to the trusted operating system by using a client interface (Client API) provided by the TEE.

In a possible implementation, the trusted operating system performs measurement (Measure) and layout (layout) operations on the secure control based on the information about the secure control, to determine a size and a display position of the secure control; and draws the secure control based on the determined size and display position of the secure control, to obtain the second surface, where the second surface is in a frame buffer of the trusted operating system.

In a possible implementation, the rich operating system sends the first surface in the frame buffer to the trusted operating system by using the communications agent. The trusted operating system composites the first surface and the second surface after obtaining the first surface, to obtain the composited surface, where the composited surface is in the frame buffer of the trusted operating system.

In a possible implementation, the rich operating system sends an address of the frame buffer of the rich operating system to the trusted operating system by using the communications agent. After obtaining the address, the trusted operating system accesses the first surface in the frame buffer of the rich operating system based on the address, and composites the first surface and the second surface to obtain the composited surface, where the composited surface is in the frame buffer of the trusted operating system.

In a possible implementation, the trusted operating system may access the frame buffer of the rich operating system. The frame buffer of the trusted operating system cannot be accessed by the rich operating system.

In a possible implementation, there are a plurality of frame buffers of the rich operating system and/or the trusted operating system.

In a possible implementation, after rendering the common control, the rich operating system obtains a plurality of surfaces, where each surface is in a separate frame buffer. The rich operating system offline combines the plurality of surfaces into the first surface by invoking graphics-related hardware. Then the trusted operating system composites the first surface and the second surface.

In a possible implementation, the compositing the first surface and the second surface includes: performing parameter calculation based on a parameter of each pixel included in the first surface and a parameter of each pixel included in the second surface, to obtain a parameter of each pixel of the composited surface.

In a possible implementation, the parameter of the pixel of the surface includes but is not limited to: RGB values.

According to the foregoing technical solutions in this application, a control-level TUI is provided, so that the non-secure control in the user interface is compatible with the TUI secure control for display, and at the same time when the secure input interface is displayed, the common interface control can also be displayed, thereby improving user experience.

## BRIEF DESCRIPTION OF DRAWINGS

To describe the technical solutions in the embodiments of this application more clearly, the following briefly describes the accompanying drawings required for describing the embodiments of this application.

FIG 1 is a schematic diagram of performing a transfer operation by using a trusted user interface (TUI);

FIG 2 is a schematic diagram of a terminal device according to an embodiment of this application;

FIG 3 is a schematic diagram of a control according to an embodiment of this application;

FIG 4 is a tree structure of a control in a user interface according to an embodiment of this application;

FIG 5 is a flowchart of a user interface display method according to an embodiment of this application;

FIG 6 is a schematic structural diagram of a terminal device according to an embodiment of this application;

FIG 7 is a schematic structural diagram of another terminal device according to an embodiment of this application;

FIG 8 is an operating principle diagram of a surface combiner in a TEE according to an embodiment of this application;

FIG 9 is a schematic structural diagram of another terminal device according to an embodiment of this application; and

FIG 10 is a schematic structural diagram of another terminal device according to an embodiment of this application.

## DESCRIPTION OF EMBODIMENTS

The following describes in detail the technical solutions in the embodiments of this application with reference to the accompanying drawings in the embodiments of this application. Apparently, the described embodiments are merely some rather than all of the embodiments of this application.

An embodiment of this application provides a user interface display method, to implement compatible display of a trusted user interface (TUI) and a user interface of a client application (CA). The method is applied to a terminal device.

The term "user interface" in the specification, claims, and accompanying drawings of this application, briefly referred to as an interface, is a graphical interface for interaction and information exchange between a user and an application or an operating system. The user interface may be a window, a dialog box, a display area, or the like. A user interface of an application is source code written by using a specific computer language such as Java or extensible markup language (XML). The interface source code is parsed and rendered on a terminal device, and finally is presented as content that can be identified by a user, such as a picture, a text, or a button. A view is a visual component of the user interface. The view is also referred to as a control or a widget. A typical view includes a button, a text field, a progress bar, a keyboard, a picture, a text, and the like. An attribute and content of a control in an interface are defined by using a tag or node. For example, the XML defines a control in the interface by using a node such as <Textview>, <ImgView>, or <ButtonView>. A node corresponds to a control or an attribute in the interface. After being parsed and rendered, the node is presented as content visible to a user.

The terminal device according to the embodiments and claims of this application is a device that provides a user with voice and/or data connectivity, including a wireless terminal or a wired terminal. The wireless terminal may communicate with one or more core networks through a radio access network (RAN). The wireless terminal may be a mobile terminal, such as a mobile phone (or referred to as a "cellular" phone), or a computer having a mobile terminal, for example, may be a portable, pocket-sized, handheld, computer built-in, or vehicle-mounted mobile apparatus. An interface, also referred to as an application programing interface (API), is an encapsulation and an abstract representation of a specific function implemented by computer program code. An application may implement the specific function by invoking the interface. A service is an application component that can be executed in a background without providing a user interface. The service can be started by another application or application component.

The following describes, with more details, the terminal device in this application with reference to the accompanying drawings. It should be noted that postpositive terms "unit" and "module" are merely for ease of description, and these postpositive terms do not have a meaning or function that is distinguished from each other.

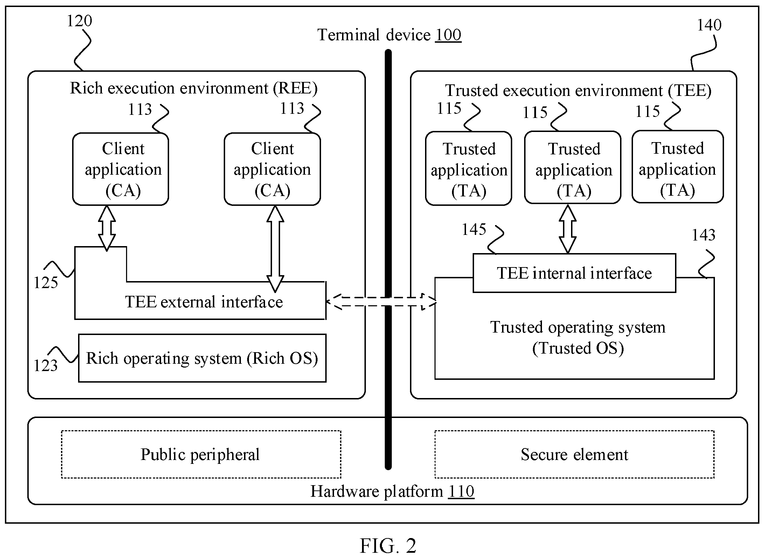

FIG 2 is an architectural diagram of a terminal device 100 according to an embodiment of this application. As shown in FIG 2, the terminal device 100 includes a hardware platform 110, and two isolated operating environments running on the hardware platform 100, namely, a rich execution environment (REE) 120 and a trusted execution environment (TEE) 140. The two operating environments each have an independent hardware resource and operating system. The hardware resource of the REE 120 and the hardware resource of the TEE 140 can be isolated by using hardware isolation technologies, such as an ARM® TrustZone mechanism. In addition, isolation between the operating system of the REE 120 and the operating system of the TEE 140 and isolation between applications are implemented by using a virtualization technology. In this way, software and hardware resources that can be accessed by the TEE 140 are separated from those that can be accessed by the REE 120, and the TEE 140 severely restricts data and a function that can be accessed by an application, so that a security level of the TEE 140 satisfies a specific security requirement. Therefore, the TEE 140 is generally considered as a secure execution environment. The REE 120 is an operating environment outside the TEE 140. Compared with the TEE 140, the REE 120 has lower security and is an environment susceptible to attacks. An application running in the REE 120, namely, a client application (CA), is also considered as untrusted.

The hardware platform 110 of the terminal device 100 includes a public peripheral and a trusted peripheral. The trusted peripheral includes a secure element (SE) that can be controlled and accessed only by the TEE 140, such as a secure memory, a secure clock, or a trusted keyboard. The public peripheral is a device that can be controlled and accessed by a rich operating system (Rich OS) 123 in the REE 120.

An application 115 running in the TEE 140 is a trusted application (TA). The TA 115 may provide a security-related function or service for a client application (CA) 113 in the REE 120 or another TA in the TEE 140. A trusted operating system (Trusted OS) 143 running in the TEE 140 provides a TEE internal interface 145 for the TA 115. The TA 115 obtains access permission for a security resource and service by using the TEE internal interface 145. The security resource and service include but are not limited to: key injection and management, encryption, secure storage, a secure clock, a trusted user interface (TUI), and a trusted keyboard.

The rich operating system123 provides richer features than the trusted operating system 143. The rich operating system 123 is very open and can accept various types of applications, but security of the rich operating system 123 is also lower than that of the trusted operating system 143. The rich operating system 123 may be a terminal operating system such as Android® or iOS®. The CA 113 running in the REE 120 may request, by using an external interface 125 provided by the TEE, a security service provided by the TA 115 in the TEE 140. For example, in a scenario such as mobile payment or an online bank transfer, if sensitive information of a user needs to be input and displayed, an application in the REE 120 may invoke a TUI and a trusted keyboard service on the TEE 140 side by using the external interface 125 provided by the TEE, to prevent the application on the REE side from maliciously intercepting and stealing the sensitive information of the user.

For definitions of terms such as REE, TEE, CA, TA, rich OS, and trusted OS in all embodiments of this application, refer to a TEE related standard proposed by the GlobalPlatform® (GP). It should be understood that in addition to the terminal device with the TEE, the user interface display method provided in the embodiments of this application may also be applied to another type of device, for example, a terminal device or a computer system with a dual domain system (a security domain and a non-security domain).

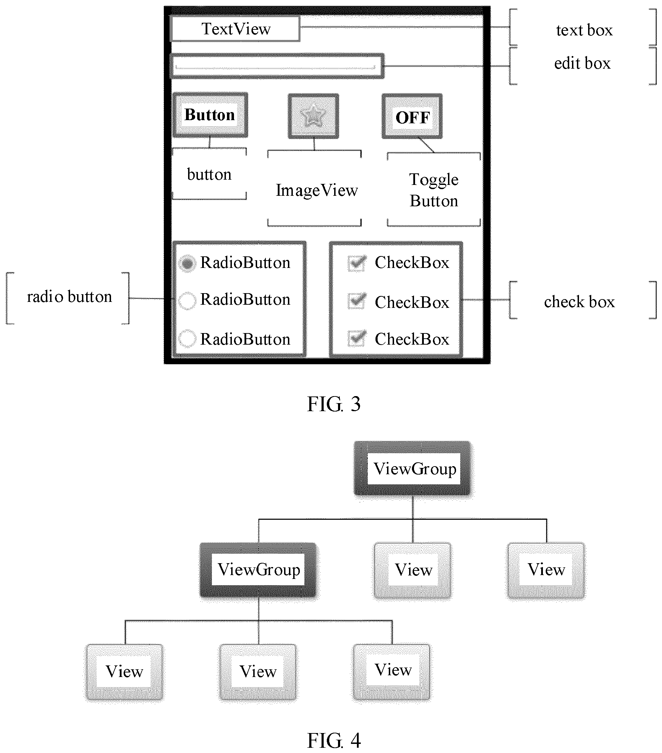

Based on the terminal device 100 described in FIG 2, an embodiment of this application provides a method for displaying a user interface on the terminal device 100. The user interface is displayed through cooperation between the rich operating system 123 and the trusted operating system 143. The rich operating system 123 provides rich native controls (also referred to as "common control" or "non-secure control" in the embodiments of this application) for an application developer to develop the user interface. Using an Android® system as an example, as shown in FIG 3, the Android® provides a plurality of native control types, such as a button (button), a text field (EditText), a radio button (RadioButton), a check box (CheckBox), and a toggle button (ToggleButton). Controls derived from these native control types are common controls (non-secure controls). The application developer can construct the user interface by using a visual development tool or XML code. For example, the application developer may declare in a layout file that one or more of these controls are used, and set an attribute of the control, such as a width, a height, or an ID of the control. The following is an example of an XML layout file that includes the text field and the button:

```
<?xml version="1.0" encoding="utf-8"?>
<LinearLayout xmlns:android="http://schemas.android.com/apk/res/android"
  android:layout_width="fill_parent"
  android:layout_height="fill_parent"
  android: orientation="horizontal ">
  <EditText android:id="@+id/edit_message"
    android:layout_weight=" 1"
    android:layout_width="0dp"
    android:layout_height="wrap_content"
    android:hint="@string/edit_message" />
  <Button android:id="@+id/button_send"
    android:layout_width="wrap_content"
    android:layout_height="wrap_content"
    android:text="@string/button_send"
    android:onClick="sendMessage" />
</LinearLayout>
```

Based on the native control provided by the rich operating system 123, a customized secure control is further added in this embodiment of this application, and is used for TUI development. The customized secure control satisfies interface security specifications of the TEE 140, and supports configuration of some customized attributes. In addition, a processing method or function corresponding to the customized control, for example, a method such as measurement, layout, or drawing, needs to be rewritten. The developer can create and edit an instance of the customized secure control in an .xml file. In an embodiment, secure controls shown in the following table may be customized:

| Native control | Control type | Control name | Control Function |
|---|---|---|---|
| | Text | Text View | Responsible for displaying a text, not editing the text |
| | | EditText | A control that may edit the text |
| | Button | Button | Button |
| | | ImageViewButton | Picture button |
| | | RadioButton | Radio button |
| | | CheckBox | Check box |
| | Progress Bar | ProgressBar | Display progress information |
| Secure control (new) | Text | Sec-TextView | Secure display field |
| | | Sec-EditText | Secure input field |
| | Button | Sec-Button | Secure button |
| | | Sec-ImageViewButton | Secure picture button |

When developing a user interface of an application, the application developer may use the native control provided by the rich operating system 123, or may use the customized secure control. In this way, a hybrid user interface that includes both the common control and the customized secure control can be developed, reducing development difficulty.

Further, when the client application 113 runs in the REE 120, the rich operating system 123 determines the control included in the user interface and an attribute of the control by parsing source code and/or a layout file corresponding to the user interface. The attribute of the control includes but is not limited to a control type, a control identifier, a control width, a control height, and the like. The control included in the user interface is usually organized in a tree structure. To be specific, controls have a parent-child relationship with each other. Using Android as an example, controls in Android are classified into two types: a ViewGroup control and a view control. As a parent control, the ViewGroup may include a plurality of view controls and manage the controls included in the ViewGroup. As shown in FIG 4, controls included in an entire user interface logically form a control tree. An upper-layer control is responsible for rendering processing of a lower-layer control and transferring an interaction event. On the top of each control tree, there is a ViewParent object, namely, a core of the control tree. All interaction management events are scheduled by the ViewParent in a centralized manner.

Further, an embodiment of this application further provides a method for compatible display of a user interface that includes a common control and a customized secure control, including the following steps:

Step 510: A rich operating system 123 renders a common control in a user interface, to obtain a first surface (surface).

Step 530: The rich operating system 123 transfers information about a secure control in the user interface to a trusted operating system 143, and the trusted operating system 143 renders the secure control to obtain a second surface.

Step 550: The trusted operating system 143 composites the first surface and the second surface to obtain a composited surface, where the composited surface includes the common control and the secure control. It should be understood that the composited surface that includes the common control and the secure control herein is a graphical representation or a graphical interface that includes both the common control and the secure control.

Step 570: The trusted operating system 143 displays the composited surface on a display of the terminal device 100.

In an embodiment, when using the secure control, a developer needs to configure information related to the secure control in an .xml file, such as a control size, and configure a communication ID in a source file or an installation package of the client application 113. The communication ID corresponds to a trusted application 115 in a TEE. The information about the secure control is transferred to a corresponding trusted application 115 in the TEE based on the communication ID and by using an external interface provided by the TEE. The trusted application 115 further completes rendering and displaying of the secure control based on a related graphics service or component provided by the trusted operating system 143.

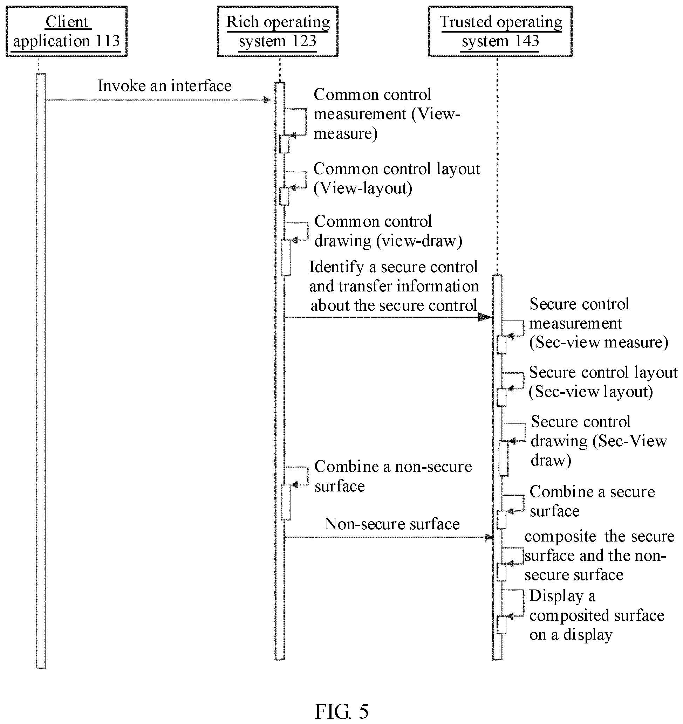

In an embodiment, in step 510, the rich operating system 123 performs rendering processing on a control by invoking a method corresponding to the common control. The method corresponding to the common control is provided by the rich operating system 123 by using a native API. In an embodiment, as shown in FIG 5, the method corresponding to the control includes: measurement (measure), layout (layout), and drawing (draw) operations. The measurement operation is mainly used to calculate a size of the control, namely, a width and a length of the control. Calculation is based on an attribute, such as a width and a height, that is of the control and that is configured in a layout file. The layout operation is used to set a display position of the control on a display. For example, in an embodiment, a position of a control relative to a parent control of the control may be calculated by using the layout operation, for example, a distance from the top, bottom, left and right edges of the control to a vertex in an upper left corner or an upper right corner of the parent control, or a distance from the top, bottom, left and right edges of the control to the top, bottom, left, and right edges of the parent control. The drawing (draw) operation is used to draw the control onto the frame buffer to obtain the first surface. Calculation results of the measurement and layout operations may be recorded in a form of parameters. The drawing (draw) operation may be used to draw the control based on these parameters. A specific graphics library such as OpenGL may be invoked during a drawing process.

In an embodiment, a security label is added to the secure control to identify the secure control. The client application and the rich operating system can identify, based on the security label, the secure control from the control included in the user interface. The security label may be a control name, a control ID, signature information, or the like.

In the embodiment, in step 530, a communications agent in the rich operating system 123 transfers information about a customized secure control in the user interface to the trusted operating system 143 by using a TEE external interface 125. An attribute of the customized secure control is configured by the developer by using a layout file or code. Methods (measurement, layout, and drawing) corresponding to the customized control are rewritten, that is, are defined by the developer, to satisfy a requirement for display on the TEE side. The information about the secure control transferred by the rich operating system 123 includes an attribute of the secure control, such as a width or a height. The trusted operating system 143 performs measurement, layout and drawing processing on the secure control by invoking the method corresponding to the secure control, to obtain the second surface.

In an embodiment, the first surface (non-secure surface) obtained in step 510 is in a frame buffer of the rich operating system 123. The second surface (secure surface) obtained in step 530 is in a frame buffer of the trusted operating system 143. The trusted operating system 143 is allowed to access the frame buffer of the rich operating system 123. However, the frame buffer of the trusted operating system 143 cannot be accessed by the rich operating system 123. The rich operating system 123 and the trusted operating system 143 each may have a plurality of frame buffers. If a plurality of surfaces are obtained after a control is rendered, the plurality of surfaces may be separately in different frame buffers.

In an embodiment, when the rich operating system 123 renders the common control, a plurality of surfaces may be generated, where each surface is in a separate frame buffer. The rich operating system 123 may invoke graphics-related hardware to first offline combine the plurality of surfaces into the first surface.

In an embodiment, the trusted operating system 143 composites the first surface and the second surface into a composited surface. The composited surface includes both the common control and the secure control. With assistance of a display driver, the composited surface is displayed by using a display. The composited surface that includes the common control and the secure control herein is a graphical representation or a graphical interface that includes both the common control and the secure control.

In an embodiment, in step 550, the rich operating system 123 may send the first surface (non-secure surface) to the trusted operating system 143 by using the communications agent. The trusted operating system 143 further composites the first surface and the second surface, to obtain the composited surface. The rich operating system 123 may also transfer, to the trusted operating system 143 by using the communications agent, the address of the frame buffer in which the first surface is located. The trusted operating system 143 may access the first surface in the frame buffer of the rich operating system 123 based on the address, to complete surface composition.

In an embodiment, in step 550, the trusted operating system 143 may composite a first surface A and a second surface B by using an AlphaBlend algorithm, to generate a composited surface C. RGB values of each pixel in the composited surface C are calculated based on RGB values of a pixel at a corresponding position of the first surface A and RGB values of a pixel at a corresponding position of the second surface B by using the following formula:

$$R(C) = (1 - alpha)*R(B) + alpha*R(A)$$

$$G(C) = (1 - alpha)*G(B) + alpha*G(A)$$

$$B(C) = (1 - alpha)*B(B) + alpha*B(A)$$

where alpha is a constant and is used to represent transparency. If alpha is 0, it indicates complete transparency. If alpha is 255, it indicates complete opaqueness.

In an embodiment, when creating a user interface, the client application 113 on the REE side invokes an interface provided by the rich operating system 123, so that the rich operating system 123 performs rendering processing on the common control in the user interface by invoking measurement, layout, and drawing methods based on a layout file of the user interface. A non-secure surface (excluding the secure control) obtained after the rendering processing is buffered in the frame buffer of the rich operating system 123, and is synchronized to the frame buffer of the trusted operating system based on a communication channel between the TEE and the REE. Further, the rich operating system 123 transfers identified information about the secure control in the user interface to the trusted operating system 143. The trusted operating system 143 performs rendering processing on the secure control based on the information about the secure control and a customized method (measure, layout, or draw) corresponding to the secure control. A secure surface (including only the secure control) obtained after the rendering processing is buffered in the frame buffer of the trusted operating system 143. Finally, the trusted operating system 143 composites the secure surface and the non-secure surface, and then displays the composited surface by using a display.

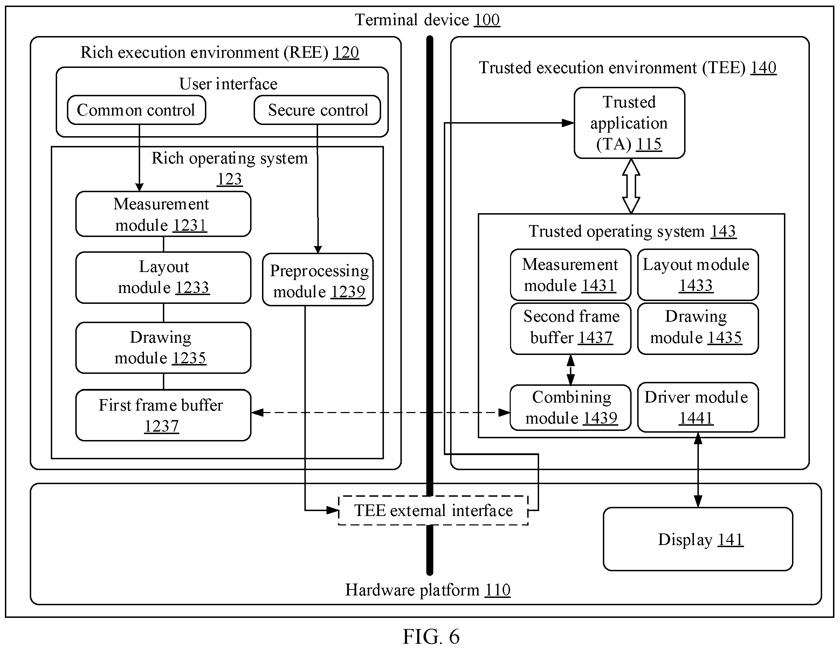

FIG 6 shows a more specific example in which the rich operating system 123 and the trusted operating system 143 cooperate with each other to process the control in the user interface. According to FIG 6, the rich operating system 123 includes: a measurement module 1231, a layout module 1233, and a drawing module 1235, respectively configured to perform measurement, layout, and drawing operations on the common control in the user interface to obtain a non-secure surface (excluding a secure control). For details about measurement, layout, and drawing of the control, refer to the description in step 510. A non-secure surface obtained after the common control is drawn is in a first frame buffer 1237. The first frame buffer 1237 is buffer space that can be controlled and accessed by the rich operating system 123.

Further, in an embodiment, the client application transfers the information about the secure control in the user interface to the trusted application 115 by invoking the communications agent (not shown in the figure) provided by the rich operating system and/or the external interface provided by the TEE. The trusted application then invokes a graphics service or component of the trusted operating system 143 to complete rendering of the secure control. In an embodiment, the trusted operating system 143 includes: a measurement module 1431, a layout module 1433, a drawing module 1435, a combining module 1439, and a driver module 1441. The measurement module 1431, the layout module 1433, and the drawing module 1435 are respectively configured to perform the measurement, layout, and drawing operations on the secure control in the user interface, to obtain the secure surface (including only the secure control). The measurement module 1431, the layout module 1433, and the drawing module 1435 perform measurement, layout, and drawing on the secure control based on the information about the secure control and the customized method (measure, layout, or draw) corresponding to the secure control. For details about measurement, layout, and drawing of the secure control, refer to the description in step 530. A secure surface obtained after the secure control is drawn is in a second frame buffer 1437. The second frame buffer 1437 is buffer space that can be controlled and accessed only by the trusted operating system 143, but cannot be accessed by the rich operating system 123 and the application in the REE 120. The combining module 1439 composites a non-secure surface in the first frame buffer 1237 and a secure surface in the second frame buffer 1437 to obtain a composited surface that includes the common control and the secure control. The driver module 1441 is configured to display the composited surface obtained by the combining module 1439 on a display 141.

In an embodiment, the rich operating system 123 may send the first surface (non-secure surface) to the trusted operating system 143 by using the communications agent. The combining module 1439 in the trusted operating system 143 then composites the first surface and the second surface to obtain the composited surface, where the composited surface is in the second frame buffer 1437. In another embodiment, alternatively, the rich operating system 123 may transfer, to the trusted operating system 143 by using the communications agent, the address of the frame buffer in which the first surface is located. The combining module 1439 in the trusted operating system 143 may access the first surface in the first frame buffer based on the address, and then implement surface composition, where the composited surface is in the second frame buffer 1437.

Optionally, in an embodiment, the rich operating system 123 further includes: a preprocessing module 1239, configured to preprocess, for example, perform initial measurement, layout, and drawing on, the secure control in the user interface. A preprocessing result is synchronized to the trusted operating system 143. The trusted operating system 143 performs further processing on the secure control based on the preprocessing result.

It should be understood that in a specific implementation of the solution, the rendering processing performed by the rich operating system 123 on the common control and the rendering processing performed by the trusted operating system 143 on the secure control are not completely performed in a serial manner, and may be performed in a cross manner or in a parallel manner. It is understood that the terminal device 100 may include fewer or more components than those shown in FIG 6. The terminal device shown in FIG 6 merely includes components more related to a plurality of implementations disclosed in the embodiments of this application.

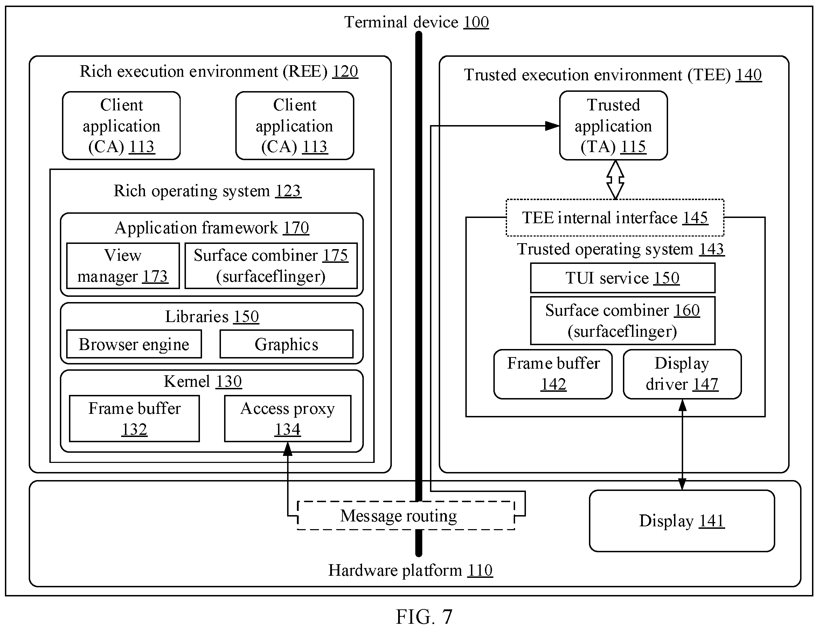

In an embodiment, as shown in FIG 7, the rich operating system 123 is an Android® system, and may be divided into a kernel 130, libraries (libraries) 150, and an application framework (application framework) 170 in terms of architecture. The kernel 130 is used to provide an underlying system component and service, for example, power management, memory management, thread management, a hardware driver program, and an access proxy 134. The access proxy 134 is mainly used to implement communication between the REE 120 and the TEE 140, for example, send or transfer information on the REE 120 side to the TEE 140 by using an interface provided by the TEE. The access proxy 134 is a process or thread in a kernel mode. For example, a function of the access proxy 134 may be undertaken by Tzdriver in the kernel. The library 150 is a program library that provides support for an executable program when the executable program is running, and includes a browser engine (such as webkit), a graphics processing engine (such as OpenGL ES), and the like. The framework 170 is used to provide a basic common component and service for the application, such as window management and view management. In an embodiment, the framework 170 includes a view manager 173, a surface combiner 175, and the like. The view manager 173 is used to perform operations such as measurement, layout, and drawing on a native view control, namely, the common control, in the user interface of the client application 113. The surface combiner 175 is used to combine surfaces drawn into a frame buffer 132, and then send a combined surface to a display device for display. The frame buffer 132 is a storage area that can be accessed by a process or thread in the kernel mode, and is used to buffer the surface drawn by the view manager 173.

In an embodiment, the view manager 173 may specifically implement the measurement, layout, and drawing operations on the native view control respectively by using onMeasure(), onLayout(), and onDraw() functions provided by the Android® system. The surface combiner 175 provides a SurfaceFlinger service for the Android® system. The view manager 173 draws the control on the surface into the frame buffer 132. The SurfaceFlinger service uses a graphics library to render the surface in the frame buffer to a hardware frame buffer.

In an embodiment, as shown in FIG 7, the trusted operating system 143 includes a trusted user interface (TUI) service 150, a surface combiner 160, a display driver 147, and a frame buffer 142. After identifying the customized secure control in the user interface of the client application 113, the application framework 170 transfers the information about the customized secure control to the trusted application 115 in the TEE 140 by using the access proxy 134. The trusted application 115 may perform operations such as measurement, layout, and drawing on the customized secure control by invoking a TUI service 150 through a TEE internal interface 145, and then buffer an obtained secure surface to the frame buffer 142. The surface combiner 160 composites the secure surface and the non-secure surface (excluding the secure control) that is in the frame buffer 132 to obtain a composited surface, where the composited surface is in the frame buffer 142. Finally, the composited surface is displayed on the display 141 by using the display driver 147.

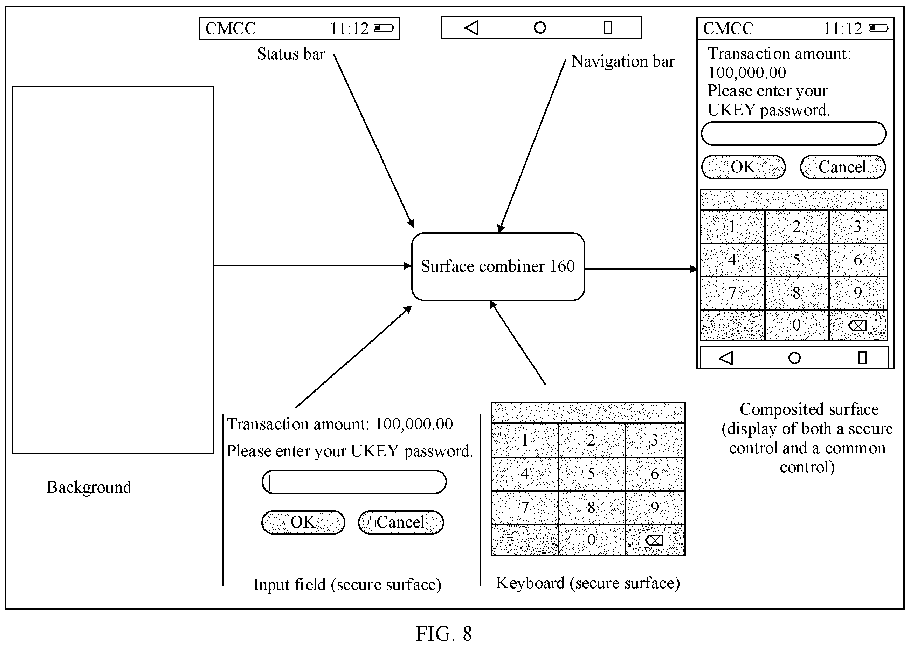

Specifically, in an embodiment, as shown in FIG 8, the view manager 173 of the rich operating system 123 performs operations such as measurement, layout, and drawing on the native view control to obtain one or more non-secure surfaces, such as a background surface, a status bar surface, and a navigation bar surface. The non-secure surface is buffered in the frame buffer 132. If there are a plurality of non-secure surfaces, the plurality of surfaces may be buffered into a plurality of frame buffers. For example, each non-secure surface is in an independent frame buffer. After performing operations such as measurement, layout, and drawing on the customized secure control, such as a secure input field and a secure keyboard light, the TUI service 150 buffers the obtained secure surface to the frame buffer 142. The surface combiner 160 composites the non-secure surface and the secure surface to obtain the composited surface that includes both the secure control and the native control. The composited surface is finally displayed by using the display 141, thereby implementing compatible display of the secure control and the non-secure control. Optionally, if there are a plurality of non-secure surfaces, before the surface combiner 160 performs composition, the rich operating system 123 may first invoke hardware to offline combine the plurality of non-secure surfaces, to combine the plurality of non-secure surfaces into one surface. Then, the surface combiner 160 composites the combined surface and the secure surface.

In an embodiment, the surface combiner 160 may composite the non-secure surface and the secure surface by using the AlphaBlend algorithm, to generate the composited surface. For specific implementation details of the AlphaBlend algorithm, refer to the foregoing embodiment.

The foregoing functions of the components of the rich operating system 123 and the trusted operating system 143 may be implemented by the processor by executing a program stored in the memory 105.

A person skilled in the art may understand that the terminal device 100 may include fewer or more components than those shown in FIG 7. The terminal device shown in FIG 7 merely includes components more related to a plurality of implementations disclosed in the embodiments of this application.

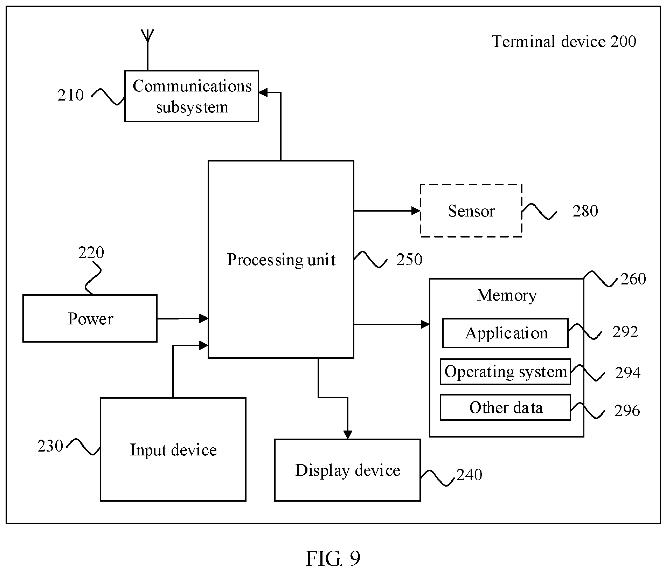

FIG 9 shows an example of another terminal device 200 according to an embodiment of this application. According to FIG 9, the terminal device 200 includes a communications subsystem 210, a power supply 220, an input device 230, a display device 240, a processing unit 250, and a memory 260. The memory 260 stores a computer program or instructions. The computer program includes an operating system 294, an application 292, and the like. The processing unit 250 is configured to execute the computer program stored in the memory 260, to implement a method defined by the computer program. For example, the processing unit 250 runs the operating system 294, to implement various functions, on the terminal device 200, of the rich operating system and the trusted operating system described in the foregoing embodiments.

The processing unit 250 may include one or more processors. For example, the processing unit 250 may include an application processor, a graphics processor, a digital signal processor, and the like. When the processing unit 250 includes a plurality of processors, the plurality of processors may be integrated into a same chip, or each may be chips independent of each other.

The memory 260 further stores other data 296 in addition to the computer program. The other data 296 may include data generated during running of the operating system 294 or the application 292, such as system data (for example, a configuration parameter of the operating system 294) and user data.

The memory 260 generally includes an internal memory and an external memory. The internal memory includes but is not limited to a random access memory (RAM), a read-only memory (ROM), a cache, or the like. The external memory includes but is not limited to a flash memory, a hard disk, a universal serial bus (USB) disk, and the like. The computer program is generally stored in the external memory. Before executing the computer program, the processing unit 250 loads the program from the external memory to the internal memory.

In an embodiment, the operating system 294 includes a computer program used to implement the user interface display method provided in the embodiments of this application, for example, a rich operating system and a trusted operating system, so that after running the operating system 294, the processing unit 250 implements steps of the user interface display method according to the embodiments of this application. For example, the view manager 173, the surface combiner 175, the TUI service 150, and the surface combiner 160 described in the foregoing embodiments may be implemented by using a computer program (instructions). After loading and running the computer program (instructions), the processing unit 250 implements respective functions of these modules.

The input device 230 is configured to receive user input information, such as numerical/character information, a touch operation, or a gesture, and generate a corresponding input signal. Specifically, in an embodiment, the input device 230 includes a touch panel. The touch panel, also referred to as a touchscreen, may collect a touch operation of a user on the touch panel, and generate a touch signal to drive a related component to respond to the operation of the user. In addition to the touch panel, the input device 230 may further include another input device, including but not limited to one or more of physical keyboards, a function key (such as a volume control press key or a switch press key), a tracking ball, a mouse, a joystick, or the like.

The display device 240 may be a display panel such as a liquid crystal display (LCD) or an organic light emitting diode (OLED). In some embodiments, the touch panel may cover the display device 240 to form a touch display screen.

The communications subsystem 210 is a basic communications unit of the terminal device 200, and is configured to send and receive data of the terminal device 200. The power supply 220 is configured to supply power to the foregoing components, and may be specifically a power management chip.

When the terminal device 200 is a wireless terminal, the communications subsystem 210 includes a wireless modem, and mainly implements functions such as baseband processing, modulation and demodulation, signal amplification and filtering, and equalization. In an embodiment, the communications subsystem 210 includes: a baseband processor, a radio frequency circuit, and an antenna. The radio frequency circuit and the antenna are mainly responsible for sending and receiving a signal. The baseband processor is responsible for signal processing, such as signal A/D and D/A conversion, and signal encoding and decoding. The baseband processor supports one or more of wireless communications standards. The wireless communications standards herein include but are not limited to global system for mobile communications (GSM), code division multiple access (CDMA), wideband code division multiple access (WCDMA), high speed packet access (HSPA), long term evolution (LTE), and the like. The baseband processor may be an independent chip, or may be integrated with a processor included in the processing unit 250 into a same chip.

Optionally, the terminal device 200 further includes one or more sensors 280, for example, an acceleration sensor and an optical sensor.

The user interface display method provided in the embodiments of this application may be performed by a proper combination of software, hardware, and/or firmware of the terminal device 200. For example, the operating system 294 shown in FIG 9 may be implemented in combination with necessary hardware.

In addition, a person skilled in the art may understand that the terminal device 200 may include fewer or more components than those shown in FIG 9. The terminal device 200 shown in FIG 9 merely shows components more related to a plurality of implementations disclosed in the embodiments of this application.

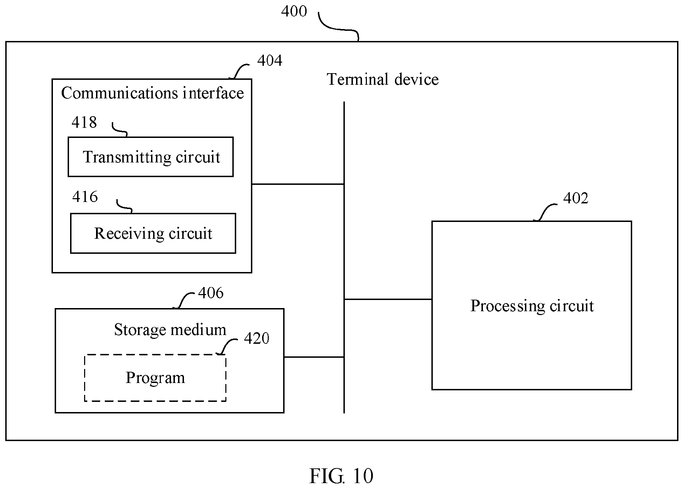

Based on the user interface display method described in the foregoing embodiments, an embodiment of this application further provides a terminal device 400. As shown in FIG 10, the terminal device 400 includes: a processing circuit 402, and a communications interface 404 and a storage medium 406 that are connected to the processing circuit 402.

The processing circuit 402 is configured to process data, control data access and storage, deliver a command, and control another component to perform an operation. The processing circuit 402 may be implemented as one or more processors, one or more controllers, and/or another structure that may be configured to execute a program. The processing circuit 402 may specifically include at least one of a general purpose processor, a digital signal processor (DSP), an application-specific integrated circuit (ASIC), a field-programmable gate array (FPGA), or another programmable logic component. The general purpose processor may include a microprocessor, and any conventional processor, controller, micro-controller, or state machine. The processing circuit 402 may be implemented as a computing element, for example, a combination of the DSP and the microprocessor.

The storage medium 406 may include a non-transitory computer-readable storage medium, such as a magnetic storage device (for example, a hard disk, a floppy disk, or a magnetic stripe), an optical storage medium (for example, a digital versatile disc (DVD), a smart card, a flash memory device, a RAM, a ROM, and a programmable read-only memory (PROM), an erasable programmable read-only memory (EPROM), a register, and any combination thereof. The storage medium 406 may be coupled to the processing circuit 402, so that the processing circuit 402 can read information and write information into the storage medium 406. Specifically, the storage medium 406 may be integrated into the processing circuit 402, or the storage medium 406 and the processing circuit 402 may be separate.

The communications interface 404 may include a circuit and/or a program to implement mutual communication between the terminal device 400 and one or more network devices (for example, a router, a switch, an access point, and the like). The communications interface 404 includes at least one receiving circuit 416 and/or at least one transmitting circuit 418. In an embodiment, the communications interface 404 may be completely or partially implemented by a wireless modem.

In an embodiment, the storage medium 406 stores a program (instructions) 420. The processing circuit 402 is adapted to execute the program (instructions) 420 stored in the storage medium 406, to implement some or all steps in any method embodiment of this application.

An embodiment of this application further provides a computer readable storage medium. The computer readable storage medium stores code, instructions, or a program that implements steps of the method in any method embodiment of this application.

It may be clearly understood by a person skilled in the art that, for the purpose of convenient and brief description, for a detailed working process of the foregoing described apparatus and unit, reference may be made to a corresponding process in the foregoing method embodiments, and details are not described herein again.

The user interface display method provided in the embodiments of this application may also be applied to a device having a dual domain system. The device includes a non-security domain and a security domain that are isolated from each other. A security level of the security domain is higher than that of the non-security domain. Similar to the TEE and the REE described in the foregoing embodiments, an application running in the non-security domain may also request a service in the security domain by using a specific interface. A graphics service or component in the non-security domain renders a common control included in a user interface of the application, to obtain one or more non-secure surfaces are obtained. A graphics service or component in the security domain renders a customized secure control included in the user interface, to obtain one or more secure surfaces. Finally, after the graphics service or component in the security domain composites, in the security domain, the secure surface and the non-secure surface, a composited surface is displayed by using a display. For specific implementation details about rendering the control in the security domain and the non-security domain and about compositing surfaces, refer to the foregoing method embodiments. Details are not described herein again.

In the several embodiments provided in this application, it should be understood that the disclosed apparatus and method may be implemented in another manner. For example, the described apparatus embodiments are merely examples. For example, division of the unit is merely logical function division. There may be other division in actual implementation. For example, a plurality of units or components may be combined or may be integrated into another system, or some features may be ignored or not performed. In addition, the indicated or discussed mutual couplings or direct couplings or communication connections may be implemented through some interfaces. The indirect couplings or communication connections between the apparatuses or units may be implemented in electronic, mechanical, or other forms.

In addition, functional units in the embodiments of this application may be integrated into one processing unit, or the units may be physically separated, or two or more units may be integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a computer software product. The computer software product is stored in a storage medium, and includes instructions for instructing a computer device (which may be a personal computer, a server, a network device, or the like) to perform all or some of the steps of the methods described in the embodiments of this application. The foregoing storage medium includes: various media that can store program code, such as a USB flash drive, a removable hard disk, a ROM, a RAM, or a compact disc.

**Claims**

1. A method for displaying a user interface on a terminal device (100), wherein the terminal device (100) comprises a trusted execution environment, TEE (140), and a rich execution environment, REE (120), a rich operating system (123) and a client application, CA (113), run in the REE (120), a trusted operating system (143) runs in the TEE (140), and a user interface of the CA (141) comprises a common control and a secure control; and the method comprises:

    rendering, by the rich operating system (123), the common control in the user interface to obtain a first surface;
    transferring information about the secure control to a corresponding trusted application in the TEE based on a communication ID and using an external interface (125) provided by the TEE;
    rendering, by the trusted operating system (143), the secure control in the user interface to obtain a second surface, wherein the trusted application renders the secure control based on a related graphics service or component provided by the trusted operating system; obtaining, by the trusted operating system (143), the first surface;
    compositing, by the trusted operating system (143), the first surface and the second surface to obtain a composited surface that comprises both the common control and the secure control, and displaying the composited surface by using a display (141).

2. The method according to claim 1, wherein the rendering, by the rich operating system (123), the common control in the user interface comprises:

    performing a measurement operation on the common control to determine a size of the common control;
    performing a layout operation on the common control to determine a display position of the common control; and
    drawing the common control based on the determined size and display position of the common control to obtain the first surface, wherein the first surface is in a frame buffer (132) of the rich operating system (123).

3. The method according to claim 1 or 2, further comprising: transferring, by the rich operating system (123), information about the secure control to the trusted operating system (143) by invoking a client interface provided by the TEE (140).

4. The method according to claim 3, wherein the rendering, by the trusted operating system (143), the secure control in the user interface to obtain a second surface comprises:

    performing, by the trusted operating system (143), a measurement and layout operation on the secure control based on the information about the secure control, to determine a size and a display position of the secure control; and
    drawing the secure control based on the determined size and display position of the secure control to obtain the second surface, wherein the second surface is in a frame buffer (142) of the trusted operating system (143).

5. The method according to any one of claims 2 to 4, wherein the compositing, by the trusted operating system (143), the first surface and the second surface to obtain a composited surface that comprises both the common control and the secure control comprises:

    obtaining, by the trusted operating system (143), the first surface that is sent by the rich operating system (123) by using a communications agent; and
    compositing, by the trusted operating system (143), the second surface onto the first surface to obtain the composited surface, wherein the composited surface is in the frame buffer (142) of the trusted operating system (143).

6. The method according to any one of claims 2 to 4, wherein the compositing, by the trusted operating system (143), the first surface and the second surface to obtain a composited surface that comprises both the common control and the secure control comprises:

    obtaining, by the trusted operating system (143), an address that is of the frame buffer (132) of the rich operating system (123) and that is sent by the rich operating system (123) by using a communications agent; and
    accessing, by the trusted operating system (143), the first surface in the frame buffer (132) of the rich operating system (123) based on the address, and compositing the first surface and the second surface to obtain the composited surface, wherein the composited surface is in the frame buffer (142) of the trusted operating system (143).

7. The method according to any one of claims 1 to 6, further comprising:
parsing, by the rich operating system (123), source code or a layout file corresponding to the user interface, to determine the common control and the secure control that are comprised in the user interface.

8. The method according to any one of claims 1 to 7, wherein the secure control carries a security label, and the rich operating system (123) distinguishes the secure control from the common control based on the security label.

9. A terminal device (100), comprising a trusted execution environment, TEE (140), and a rich execution environment, REE (120), that are isolated from each other, wherein a rich operating system (123) and a client application, CA (113), run in the REE (120), a trusted operating system (143) runs in the TEE (140), and a user interface of the CA (113) comprises a common control and a secure control;

the rich operating system (123) is configured to render the common control in the user interface to obtain a first surface;
transfer information about the secure control to a corresponding trusted application in the TEE based on a communication ID and using an external interface (125) provided by the TEE and
the trusted operating system (143) is configured to: render the secure control in the user interface to obtain a second surface; wherein the trusted application renders the secure control based on a related graphics service or component provided by the trusted operating system , obtain the first surface and composite the first surface and the second surface to obtain a composited surface that comprises the common control and the secure control, and display the composited surface by using a display (141).

10. The terminal device (100) according to claim 9, wherein the rich operating system (123) further comprises: a communications agent, configured to transfer information about the secure control to the trusted operating system (143).

11. The terminal device (100) according to claim 10, wherein the trusted operating system (143) comprises:

a measurement module (1431), configured to perform a measurement operation on the secure control based on the information about the secure control, to determine a size of the secure control;
a layout module (1433), configured to perform a layout operation on the secure control to determine a display position of the secure control; and
a drawing module (1435), configured to draw the secure control based on the determined size and display position of the secure control to obtain the second surface, wherein the second surface is in a frame buffer (142) of the trusted operating system (143).

12. The terminal device (100) according to claim 10 or 11, wherein the communications agent is further configured to synchronize the first surface in the frame buffer (132) of the rich operating system (123) to the frame buffer (142) of the trusted operating system (143); and the trusted operating system (143) further comprises: a combining module (1439), configured to composite the second surface onto the first surface to obtain the composited surface, wherein the composited surface is in the frame buffer (142) of the trusted operating system (143).

13. The terminal device (100) according to claim 10 or 11, wherein the communications agent is further configured to transfer an address of the frame buffer (132) of the rich operating system (123) to the trusted operating system (143); and the trusted operating system (143) further comprises: a combining module (1439), configured to access the first surface in the frame buffer (132) of the rich operating system (123) based on the address, and composite the first surface and the second surface to obtain the composited surface, wherein the composited surface is in the frame buffer (142) of the trusted operating system (143).

14. A computer readable storage medium, wherein the computer readable storage medium stores a computer program which, when executed by a processor, cause the processor to perform steps of the method according to any one of claims 1 to 8.

**Patentansprüche**

1. Verfahren zum Anzeigen einer Benutzerschnittstelle auf einer Endgerätevorrichtung (100), wobei die Endgerätevorrichtung (100) eine vertrauenswürdige Ausführungsumgebung, TEE (140) und eine vielseitige Ausführungsumgebung, REE (120), ein vielseitiges Betriebssystem (123) und eine Client-Anwendung, CA (113) umfasst, die in der REE (120) ausgeführt werden, ein vertrauenswürdiges Betriebssystem (143), das in der TEE (140) ausgeführt wird und eine Benutzerschnittstelle der CA (141), eine gemeinsame Steuerung und eine sichere Steuerung umfasst; und das Verfahren Folgendes umfasst:

Rendern, durch das vielseitige Betriebssystem (123), der gemeinsamen Steuerung in der Benutzerschnittstelle, um eine erste Oberfläche zu erhalten;

Übertragen von Informationen über die sichere Steuerung an eine entsprechende vertrauenswürdige Anwendung in der TEE auf Grundlage einer Kommunikations-ID und mithilfe einer externen Schnittstelle (125), die von der TEE bereitgestellt wird:

Rendern, durch das vertrauenswürdige Betriebssystem (143), der sicheren Steuerung in der Benutzerschnittstelle, um eine zweite Oberfläche zu erhalten, wobei die vertrauenswürdige Anwendung die sichere Steuerung basierend auf einem verwandten Grafikdienst oder einer Komponente, die durch das vertrauenswürdige Betriebssystem bereitgestellt wird, rendert; Erhalten der ersten Oberfläche durch das vertrauenswürdige Betriebssystem (143);

Zusammensetzen der ersten Oberfläche und der zweiten Oberfläche durch das vertrauenswürdige Betriebssystem (143), um eine zusammengesetzte Oberfläche zu erhalten, die sowohl die gemeinsame Steuerung als auch die sichere Steuerung umfasst, und Anzeigen der zusammengesetzten Oberfläche unter Verwendung einer Anzeige (141).

2. Verfahren nach Anspruch 1, wobei das Rendern der gemeinsamen Steuerung in der Benutzerschnittstelle durch das vielseitige Betriebssystem (123) Folgendes umfasst:

Durchführen eines Messvorgangs an der gemeinsamen Steuerung, um eine Größe der gemeinsamen Steuerung zu bestimmen;

Durchführen eines Layout-Vorgangs an dem gemeinsamen Bedienelement, um eine Anzeigeposition des gemeinsamen Bedienelements zu bestimmen; und

Zeichnen des gemeinsamen Steuerelements basierend auf der bestimmten Größe und Anzeigeposition des gemeinsamen Steuerelements, um die erste Oberfläche zu erhalten, wobei sich die erste Oberfläche in einem Einzelbildpuffer (132) des vielseitigen Betriebssystems (123) befindet.

3. Verfahren nach Anspruch 1 oder 2, ferner umfassend: Übertragen, durch das vielseitige Betriebssystem (123), von Informationen über die sichere Steuerung an das vertrauenswürdige Betriebssystem (143) durch Aufrufen einer Client-Schnittstelle, die durch die TEE (140) bereitgestellt wird.

4. Verfahren nach Anspruch 3, wobei das Rendern der sicheren Steuerung in der Benutzerschnittstelle durch das vertrauenswürdige Betriebssystem (143) zum Erhalten einer zweiten Oberfläche Folgendes umfasst:

Durchführen, durch das vertrauenswürdige Betriebssystem (143), eines Mess- und Layoutvorgangs an der sicheren Steuerung basierend auf den Informationen über das sichere Steuerelement, um eine Größe und eine Anzeigeposition der sicheren Steuerung zu bestimmen; und

Zeichnen der sicheren Steuerung basierend auf der bestimmten Größe und Anzeigeposition der sicheren Steuerung, um die zweite Oberfläche zu erhalten, wobei sich die zweite Oberfläche in einem Einzelbildpuffer (142) des vertrauenswürdigen Betriebssystems (143) befindet.

5. Verfahren nach einem der Ansprüche 2 bis 4, wobei das Zusammensetzen durch das vertrauenswürdige Betriebssystem (143) der ersten Oberfläche und der zweiten Oberfläche zum Erhalten einer zusammengesetzten Oberfläche, die sowohl die gemeinsame Steuerung als auch die sichere Steuerung umfasst, Folgendes umfasst: Erhalten, durch das vertrauenswürdige Betriebssystem (143), der ersten Oberfläche, die durch das vielseitige Betriebssystem (123) mithilfe eines Kommunikationsagenten gesendet wird; und Zusammensetzen, durch das vertrauenswürdige Betriebssystem (143), der zweiten Oberfläche auf der ersten Oberfläche, um die zusammengesetzte Oberfläche zu erhalten, wobei sich die zusammengesetzte Oberfläche in dem Einzelbildpuffer (142) des vertrauenswürdigen Betriebssystems (143) befindet.

6. Verfahren nach einem der Ansprüche 2 bis 4, wobei das Zusammensetzen durch das vertrauenswürdige Betriebssystem (143) der ersten Oberfläche und der zweiten Oberfläche zum Erhalten einer zusammengesetzten Oberfläche, die sowohl die gemeinsame Steuerung als auch die sichere Steuerung umfasst, Folgendes umfasst:

Erhalten, durch das vertrauenswürdige Betriebssystem (143), einer Adresse, die aus dem Einzelbildpuffer (132) des vielseitigen Betriebssystems (123) stammt und die durch das vielseitige Betriebssystem (123) mithilfe eines Kommunikationsagenten gesendet wird; und

Zugreifen, durch das vertrauenswürdige Betriebssystem (143), auf die erste Oberfläche in dem Einzelbildpuffer (132) des vielseitigen Betriebssystems (123) basierend auf der Adresse und dem Zusammensetzen der ersten Oberfläche und der zweiten Oberfläche, um die zusammengesetzte Oberfläche zu erhalten, wobei sich die zusammengesetzte Oberfläche im Einzelbildpuffer (142) des vertrauenswürdigen Betriebssystems (143) befindet.

7. Verfahren nach einem der Ansprüche 1 bis 6, ferner Folgendes umfassend:
Analysieren, durch das vielseitige Betriebssystem (123), des Quellcodes oder einer Layoutdatei, die der Benutzerschnittstelle entspricht, um die gemeinsame Steuerung und die sichere Steuerung zu bestimmen, die in der Benutzerschnittstelle enthalten sind.

8. Verfahren nach einem der Ansprüche 1 bis 7, wobei die sichere Steuerung eine Sicherheitskennung trägt und das umfangreiche Betriebssystem (123) die sichere Steuerung von der gemeinsamen Steuerung basierend auf der Sicherheitskennung unterscheidet.

9. Endgerätevorrichtung (100), umfassend eine vertrauenswürdige Ausführungsumgebung, TEE (140), und eine vielseitige Ausführungsumgebung, REE (120), die voneinander isoliert sind, wobei ein vielseitiges Betriebssystem (123) und eine Client-Anwendung CA (113) in in der REE (120) ausgeführt werden, ein vertrauenswürdiges Betriebssystem (143) in der TEE (140) ausgeführt wird, und eine Benutzerschnittstelle der CA (113) eine gemeinsame Steuerung und eine sichere Steuerung umfasst; das vielseitige Betriebssystem (123) konfiguriert ist, um die gemeinsame Steuerung in der Benutzerschnittstelle wiederzugeben, um eine erste Oberfläche zu erhalten;
Übertragen von Informationen über die sichere Steuerung an eine entsprechende vertrauenswürdige Anwendung in der TEE auf Grundlage einer Kommunikations-ID und mithilfe einer externen Schnittstelle (125), die von der TEE bereitgestellt wird, und das vertrauenswürdige Betriebssystem (143) konfiguriert ist zum: Rendern der sicheren Steuerung in der Benutzerschnittstelle, um eine zweite Oberfläche zu erhalten; wobei die vertrauenswürdige Anwendung das sichere Steuerelement basierend auf einem verwandten Grafikdienst oder einer Komponente, die von dem vertrauenswürdigen Betriebssystem bereitgestellt wird, rendert, die erste Oberfläche erhält und die erste Oberfläche und die zweite Oberfläche zusammensetzt, um eine zusammengesetzte Oberfläche zu erhalten, die die gemeinsame Steuerung und die sichere Steuerung umfasst, und Anzeigen der zusammengesetzten Oberfläche mithilfe einer Anzeige (141).

10. Endgerätevorrichtung (100) nach Anspruch 9, wobei das vielseitige Betriebssystem (123) ferner Folgendes umfasst:
einen Kommunikationsagenten, der konfiguriert ist, um Informationen über die sichere Steuerung an das vertrauenswürdige Betriebssystem (143) zu übertragen.

11. Endgerätevorrichtung (100) nach Anspruch 10, wobei das vertrauenswürdige Betriebssystem (143) Folgendes umfasst:

ein Messmodul (1431), das konfiguriert ist, um einen Messvorgang an der sicheren Steuerung basierend auf den Informationen über die sichere Steuerung durchzuführen, um eine Größe der sicheren Steuerung zu bestimmen;
ein Layoutmodul (1433), das konfiguriert ist, um einen Layoutvorgang auf dem sicheren Steuerelement durchzuführen, um eine Anzeigeposition des sicheren Steuerelements zu bestimmen; und
ein Zeichenmodul (1435), das konfiguriert ist, um das sichere Steuerelement basierend auf der bestimmten Größe und Anzeigeposition des sicheren Steuerelements zu zeichnen, um die zweite Oberfläche zu erhalten, wobei sich die zweite Oberfläche in einem Einzelbildpuffer (142) des vertrauenswürdigen Betriebssystems (143) befindet.

12. Endgerätevorrichtung (100) nach Anspruch 10 oder 11, wobei der Kommunikationsagent ferner konfiguriert ist, um die erste Oberfläche im Einzelbildpuffer (132) des vielseitigen Betriebssystems (123) mit dem Einzelbildpuffer (142) des vertrauenswürdigen Betriebssystems (143) zu synchronisieren; und das vertrauenswürdige Betriebssystem (143) ferner Folgendes umfasst: ein Kombinationsmodul (1439), das konfiguriert ist, um die zweite Oberfläche auf der ersten Oberfläche zusammenzusetzen, um die zusammengesetzte Oberfläche zu erhalten, wobei sich die zusammengesetzte Oberfläche in dem Einzelbildpuffer (142) des vertrauenswürdigen Betriebssystems (143) befindet.

**13.** Endgerätevorrichtung (100) nach Anspruch 10 oder 11, wobei der Kommunikationsagent ferner konfiguriert ist, um eine Adresse des Einzelbildpuffers (132) des vielseitigen Betriebssystems (123) an das vertrauenswürdige Betriebssystem (143) zu übertragen; und das vertrauenswürdige Betriebssystem (143) ferner Folgendes umfasst: ein Kombinationsmodul (1439), das konfiguriert ist, um auf die erste Oberfläche in dem Einzelrahmenpuffer (132) des vielseitigen Betriebssystems (123) basierend auf der Adresse zuzugreifen und die erste Oberfläche und die zweite Oberfläche zusammenzusetzen, um die zusammengesetzte Oberfläche zu erhalten, wobei sich die zusammengesetzte Oberfläche in dem Einzelbildpuffer (142) des vertrauenswürdigen Betriebssystems (143) befindet.

**14.** Computerlesbares Speichermedium, wobei das computerlesbare Speichermedium ein Computerprogramm speichert, das, wenn es von einem Prozessor ausgeführt wird, den Prozessor veranlasst, Schritte des Verfahrens nach einem der Ansprüche 1 bis 8 auszuführen.

## Revendications

**1.** Procédé d'affichage d'une interface utilisateur sur un dispositif terminal (100), dans lequel le dispositif terminal (100) comprend un environnement d'exécution fiable, TEE (140), et un environnement d'exécution riche, REE (120), un système d'exploitation riche (123) et une application client, CA (113), exécutée dans le REE (120), un système d'exploitation fiable (143) exécuté dans le TEE (140), et une interface utilisateur de la CA (141) comprend une commande commune et une commande sécurisée ; et le procédé comprend :

le rendu, par le système d'exploitation riche (123), de la commande commune dans l'interface utilisateur pour obtenir une première surface ;
le transfert d'informations sur la commande sécurisée à une application fiable correspondante dans le TEE sur la base d'un ID de communication et en utilisant une interface externe (125) fournie par le TEE :

le rendu, par le système d'exploitation fiable (143), de la commande sécurisée dans l'interface utilisateur pour obtenir une seconde surface, dans lequel l'application fiable rend la commande sécurisée sur la base d'un service ou d'un composant graphique associé fourni par le système d'exploitation fiable ;
l'obtention, par le système d'exploitation fiable (143), de la première surface ;
la composition, par le système d'exploitation fiable (143), de la première surface et de la seconde surface pour obtenir une surface composite qui comprend à la fois la commande commune et la commande sécurisée, et l'affichage de la surface composite à l'aide d'un dispositif d'affichage (141).

**2.** Procédé selon la revendication 1, dans lequel le rendu, par le système d'exploitation riche (123), de la commande commune dans l'interface utilisateur comprend :

la réalisation d'une opération de mesure sur la commande commune pour déterminer une taille de la commande commune ;
la réalisation d'une opération de disposition sur la commande commune pour déterminer une position d'affichage de la commande commune ; et
le traçage de la commande commune sur la base de la taille et de la position d'affichage déterminées de la commande commune pour obtenir la première surface, dans lequel la première surface se trouve dans un tampon de trame (132) du système d'exploitation riche (123).

**3.** Procédé selon la revendication 1 ou 2, comprenant en outre : le transfert, par le système d'exploitation riche (123), d'informations sur la commande sécurisée au système d'exploitation fiable (143) en invoquant une interface client fournie par le TEE (140).

**4.** Procédé selon la revendication 3, dans lequel le rendu, par le système d'exploitation fiable (143), de la commande sécurisée dans l'interface utilisateur pour obtenir une seconde surface comprend :

la réalisation, par le système d'exploitation fiable (143), d'une opération de mesure et de disposition sur la commande sécurisée sur la base des informations sur la commande sécurisée, pour déterminer une taille et une position d'affichage de la commande sécurisée ; et

le traçage de la commande sécurisée sur la base de la taille et de la position d'affichage déterminées de la commande sécurisée pour obtenir la seconde surface, dans lequel la seconde surface se trouve dans un tampon de trame (142) du système d'exploitation fiable (143).

5. Procédé selon l'une quelconque des revendications 2 à 4, dans lequel la composition, par le système d'exploitation fiable (143), de la première surface et de la seconde surface pour obtenir une surface composite comprenant à la fois la commande commune et la commande sécurisée comprend :

l'obtention, par le système d'exploitation fiable (143), de la première surface qui est envoyée par le système d'exploitation riche (123) en utilisant un agent de communication ; et
la composition, par le système d'exploitation fiable (143), de la seconde surface sur la première surface pour obtenir la surface composite, dans lequel la surface composite se trouve dans le tampon de trame (142) du système d'exploitation fiable (143).

6. Procédé selon l'une quelconque des revendications 2 à 4, dans lequel la composition, par le système d'exploitation fiable (143), de la première surface et de la seconde surface pour obtenir une surface composite comprenant à la fois la commande commune et la commande sécurisée comprend :

l'obtention, par le système d'exploitation fiable (143), d'une adresse du tampon de trame (132) du système d'exploitation riche (123) et qui est envoyée par le système d'exploitation riche (123) en utilisant un agent de communication ; et
l'accès, par le système d'exploitation fiable (143), à la première surface dans le tampon de trame (132) du système d'exploitation riche (123) sur la base de l'adresse, et la composition de la première surface et de la seconde surface pour obtenir la surface composite, dans lequel la surface composite se trouve dans le tampon de trame (142) du système d'exploitation fiable (143).

7. Procédé selon l'une quelconque des revendications 1 à 6, comprenant en outre :
l'analyse, par le système d'exploitation riche (123), d'un code source ou d'un fichier de disposition correspondant à l'interface utilisateur, pour déterminer la commande commune et la commande sécurisée qui sont comprises dans l'interface utilisateur.

8. Procédé selon l'une quelconque des revendications 1 à 7, dans lequel la commande sécurisée contient une étiquette de sécurité, et le système d'exploitation riche (123) distingue la commande sécurisée de la commande commune sur la base de l'étiquette de sécurité.

9. Dispositif terminal (100), comprenant un environnement d'exécution fiable, TEE (140), et un environnement d'exécution riche, REE (120), qui sont isolés l'un de l'autre, dans lequel un système d'exploitation riche (123) et une application client, CA (113), exécutée dans le REE (120), un système d'exploitation fiable (143) exécuté dans le TEE (140), et une interface utilisateur de la CA (113) comprend une commande commune et une commande sécurisée ;

le système d'exploitation riche (123) est configuré pour rendre la commande commune dans l'interface utilisateur pour obtenir une première surface ;
transférer des informations sur la commande sécurisée à une application fiable correspondante dans le TEE sur la base d'un ID de communication et en utilisant une interface externe (125) fournie par le TEE, et
le système d'exploitation fiable (143) est configuré pour : rendre la commande sécurisée dans l'interface utilisateur pour obtenir une seconde surface ; dans lequel l'application fiable rend la commande sécurisée sur la base d'un service ou d'un composant graphique associé fourni par le système d'exploitation fiable, obtenir la première surface et composer la première surface et la seconde surface pour obtenir une surface composite qui comprend la commande commune et la commande sécurisée, et afficher la surface composite à l'aide d'un dispositif d'affichage (141).

10. Dispositif terminal (100) selon la revendication 9, dans lequel le système d'exploitation riche (123) comprend en outre : un agent de communication, configuré pour transférer des informations sur la commande sécurisée au système d'exploitation fiable (143).

11. Dispositif terminal (100) selon la revendication 10, dans lequel le système d'exploitation fiable (143) comprend :

un module de mesure (1431), configuré pour effectuer une opération de mesure sur la commande sécurisée sur la base des informations sur la commande sécurisée, pour déterminer une taille de la commande sécurisée ;
un module de disposition (1433), configuré pour effectuer une opération de disposition sur la commande sécurisée pour déterminer une position d'affichage de la commande sécurisée ; et
un module de traçage (1435), configuré pour tracer la commande sécurisée sur la base de la taille et de la position d'affichage déterminées de la commande sécurisée pour obtenir la seconde surface, dans lequel la seconde surface se trouve dans un tampon de trame (142) du système d'exploitation fiable (143).

12. Dispositif terminal (100) selon la revendication 10 ou 11, dans lequel l'agent de communication est en outre configuré pour synchroniser la première surface dans le tampon de trame (132) du système d'exploitation riche (123) avec le tampon de trame (142) du système d'exploitation fiable (143) ; et le système d'exploitation fiable (143) comprend en outre : un module de combinaison (1439), configuré pour composer la seconde surface sur la première surface pour obtenir la surface composite, dans lequel la surface composite se trouve dans le tampon de trame (142) du système d'exploitation fiable (143).

13. Dispositif terminal (100) selon la revendication 10 ou 11, dans lequel l'agent de communication est en outre configuré pour transférer une adresse du tampon de trame (132) du système d'exploitation riche (123) au système d'exploitation fiable (143) ; et le système d'exploitation fiable (143) comprend en outre : un module de combinaison (1439), configuré pour accéder à la première surface dans le tampon de trame (132) du système d'exploitation riche (123) sur la base de l'adresse, et composer la première surface et la seconde surface pour obtenir la surface composite, dans lequel la surface composite se trouve dans le tampon de trame (142) du système d'exploitation sécurisé (143).

14. Support de stockage lisible par ordinateur, dans lequel le support de stockage lisible par ordinateur stocke un programme informatique qui, lorsqu'il est exécuté par un processeur, amène le processeur à réaliser les étapes du procédé selon l'une quelconque des revendications 1 à 8.

## First phone (Transfer interface - REE side)

CMCC .ill 11:12

< Transfer

Payment
account: 6217*****053 >
Receipt name: Wang **
Receipt
account: 6214*****005 (x)
Receiving bank: XX Bank >

Transfer amount

¥100,000.00

Next

**Transfer interface (displayed on an REE side)**

## Second phone (Trusted user interface - TUI)

**XX Bank**

Receipt
account: 6214*****005
Receipt name: Wang **
Transaction
amount: 100,000.00
Please enter your
UKEY password.

OK    Cancel

q w e r t u u i o p
a s d f g h j k l
⬆ z x c v b n m ≪
123 , . ✓

**Trusted user interface (TUI)**

## Third phone (Transfer interface - REE side)

CMCC .ill 11:12

Completed

✓

**Transferred
successfully**

Transferred amount:
¥100,000.00

Receipt account: 6214*****005

More ∨

Check
balance

One
more
transfer

Safe
logout

**Transfer interface (displayed on an REE side)**

FIG. 1

**Terminal device 100**

120

Rich execution environment (REE)

113

Client application (CA)

113

Client application (CA)

125

TEE external interface

123

Rich operating system (Rich OS)

140

Trusted execution environment (TEE)

115          115          115

Trusted application (TA)

Trusted application (TA)

Trusted application (TA)

145

TEE internal interface

143

Trusted operating system (Trusted OS)

Public peripheral

Secure element

**Hardware platform 110**

FIG. 2

FIG. 3

FIG. 4

FIG. 5

**Terminal device 100**

**Rich execution environment (REE) 120**

**User interface**

| Common control | Secure control |

**Rich operating system 123**

Measurement module 1231

Layout module 1233

Preprocessing module 1239

Drawing module 1235

First frame buffer 1237

**Trusted execution environment (TEE) 140**

Trusted application (TA) 115

**Trusted operating system 143**

| Measurement module 1431 | Layout module 1433 |

| Second frame buffer 1437 | Drawing module 1435 |

| Combining module 1439 | Driver module 1441 |

TEE external interface

Display 141

**Hardware platform 110**

FIG. 6

EP 3 678 021 B1

Terminal device 100

Rich execution environment (REE) 120

Client application (CA) 113

Client application (CA) 113

Rich operating system 123

Application framework 170

View manager 173

Surface combiner 175 (surfaceflinger)

Libraries 150

Browser engine

Graphics

Kernel 130

Frame buffer 132

Access proxy 134

Trusted execution environment (TEE) 140

Trusted application (TA) 115

TEE internal interface 145

Trusted operating system 143

TUI service 150

Surface combiner 160 (surfaceflinger)

Frame buffer 142

Display driver 147

Message routing

Display 141

Hardware platform 110

FIG. 7

EP 3 678 021 B1

| CMCC | 11:12 ▭ |
|---|---|

Status bar

| ◁ | ○ | ▢ |
|---|---|---|

Navigation bar

| CMCC | 11:12 ▭ |
|---|---|

Transaction amount:
100,000.00
Please enter your
UKEY password.

| ( | | ) |
|---|---|---|

| OK | Cancel |
|---|---|

| ⌄ |
|---|
| 1 | 2 | 3 |
| 4 | 5 | 6 |
| 7 | 8 | 9 |
| | 0 | ⌫ |

| ◁ | ○ | ▢ |
|---|---|---|

Background

Surface combiner 160

Composited surface
(display of both a secure
control and a common
control)

Transaction amount: 100,000.00

Please enter your UKEY password.

| ( | | ) |
|---|---|---|

| OK | Cancel |
|---|---|

| ⌄ |
|---|
| 1 | 2 | 3 |
| 4 | 5 | 6 |
| 7 | 8 | 9 |
| | 0 | ⌫ |

Input field (secure surface)

Keyboard (secure surface)

FIG. 8

25

FIG. 9

400

404

Communications interface

Terminal device

418

Transmitting circuit

416

Receiving circuit

402

406

Storage medium

420

Program

Processing circuit

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2648129 A1
- WO 2017147786 A1
- US 20130301830 A1
- CN 104809413 A